# EUROPEAN PATENT APPLICATION

(11) **EP 1 632 751 A1**
(43) Date of publication of application: **08.03.2006**
(21) Application number: 05019218.6
(22) Date of filing: 05.09.2005
(51) Int. Cl.: G01C 21/36

(54) **Navigation device, information input/output device, navigation system, navigation display method, and navigation display program**

(30) Priority: 06.09.2004 JP 2004258441
(71) Applicant: AISIN AW CO., LTD., Anjo, Aichi 444-1192 (JP)
(72) Inventor: Nakayama, Takaaki, Okazaki, Aichi 444-8564 (JP); Ito, Wataru, Okazaki, Aichi 444-8564 (JP); Ushida, Koichi, Okazaki, Aichi 444-8564 (JP)
(74) Representative: TBK-Patent

(57) **Abstract**

Navigation display devices, systems, methods, and/or programs acquire map data; generate output data for displaying a map based upon the map data; and send to an information input/output device an amount of the output data that is greater than one output section, one output section being an amount of the output data that can be displayed on a single screen of the information input/output device. Navigation display devices, systems, methods, and/or programs receive an amount of output data greater than one output section from a navigation device; record at least a portion of the output data in the recording device; output a section of the output data on the output portion; and shift the output data that is output on the output portion in accordance with a shift request from the input portion, such that a different section of the output data is displayed on the output portion.

## Description

### INCORPORATION BY REFERENCE

The disclosure of Japanese Patent Application No. 2004-258441 filed on September 6, 2004 including the specification, drawings and abstract is incorporated herein by reference in its entirety.

### BACKGROUND

### 1. Related Technical Fields

Related technical fields include navigation devices, information devices, navigation systems, navigation programs, and information programs.

### 2. Description of Related Art

A conventional navigation device, for example, detects a present position of a vehicle using a global positioning system (GPS). The conventional navigation device detects a vehicle orientation based upon a turning angle of the vehicle that is detected by a gyro sensor. Map data is read out from a memory, whereby a map screen is generated on a display portion. An indication of the vehicle position representing the present location and the area surrounding the vehicle's position are then displayed on the map screen.
Accordingly, a driver operating the navigation device is able to follow the map and the vehicle position displayed on the map screen.

In addition, if the driver inputs a destination and sets search conditions, a route from a point of departure, which is shown as the present location according to the map data, to the destination is searched for based upon the search conditions. The searched route is then displayed on the map screen along the vehicle's position. Hence, the driver is able to run the vehicle in accordance with the search route.

In order to achieve the above, the conventional navigation device is provided with a controller including a CPU. The controller generates a map screen on a display based upon map data, and executes processing including processing for displaying the vehicle's position, a map or the like on the map screen, and processing for searching for a route (see Japanese Patent Laid-Open Publication No. 2004-177148 for an example).

### SUMMARY

Typically the vehicle in which the above conventional navigation device is mounted has a long life cycle, and the vehicle can be used over a long period of time. However, updated functions are added and modifications are made to navigation devices within extremely short periods of time. Thus, it is undesirable to use the same navigation apparatus over a long period of time, such as the life of a vehicle. This in turn makes the navigation device less convenient.

Furthermore, in addition to the processing described above, the conventional navigation device has many functions that are used simultaneously. These include processing for data communication and processing for providing general information, music information or image information. Consequently, calculation processing by the CPU calls for a large amount of processing, and thus a long processing time.

One possible way to address this issue is separating an input/output portion from the navigation device to serve as an information input/output device, and then dividing the processing among the rest of the navigation device and the information input/output device.

However, the amount of data per unit time cannot be increased when sending output data from the navigation device to the information input/output device. Consequently, the map screen may temporarily turn blank, for example, if the driver operates an operating portion in order to change an output status by scrolling through the map screen. As a result, output data processing cannot be smoothly executed.

It is an object of the invention to resolve one or more of the above issues regarding the conventional navigation device, and to provide navigation devices, systems, methods, and programs that are capable of smoothly executing output data processing when an attempt is made to change an output status.

This object is achieved by the measures defined in the independent claims. Advantageous further developments are set out in the respective dependent claims.

Accordingly, various exemplary implementations of the principles described herein provide devices, systems, methods, and/or programs that acquire map data; generate output data for displaying a map based upon the map data; and send to an information input/output device an amount of the output data that is greater than one output section, one output section being an amount of the output data that can be displayed on a single screen of the information input/output device.

Various exemplary implementations of the principles described herein provide devices, systems, methods, and/or programs that receive an amount of output data greater than one output section from a navigation device, one output section being an amount of the output data that can be displayed on a single screen of the information input/output device; record at least a portion of the output data in the recording device; output a section of the output data on the output portion; and shift the output data that is output on the output portion in accordance with a shift request from the input portion, such that a different section of the output data is displayed on the output portion.

### BRIEF DESCRIPTION OF THE DRAWINGS

Exemplary embodiments will now be described with reference to the accompanying drawings, wherein:

FIG. 1 is a block diagram showing a navigation system according to an exemplary embodiment of the invention described herein;

FIG. 2 shows a map screen according to an exemplary embodiment of the invention described herein;

FIG. 3 shows a status list of the map screen according to an exemplary embodiment of the invention described herein;

FIG. 4 shows a map screen according to an exemplary embodiment of the invention described herein;

FIG. 5 shows a display method according to an exemplary embodiment of the invention described herein;

FIG. 6 shows a command table of the map screen according to an exemplary embodiment of the invention described herein;

FIG. 7 shows a display method according to an exemplary embodiment of the invention described herein;

FIG. 8 shows a destination-setting screen according to an exemplary embodiment of the invention described herein;

FIG. 9 shows a command table of the destination-setting screen according to an exemplary embodiment of the invention described herein;

FIG. 10 is a conceptual diagram of a drawing method according to an exemplary embodiment of the invention described herein;

FIG. 11 shows an example of display data for displaying surrounding facilities according to an exemplary embodiment of the invention described herein;

FIG. 12 shows a screen listing surrounding facilities according to an exemplary embodiment of the invention described herein;

FIG. 13 shows a screen listing surrounding facilities according to an exemplary embodiment of the invention described herein;

FIG. 14 shows a screen listing surrounding facilities according to an exemplary embodiment of the invention described herein;

FIG. 15 shows a display method according to an exemplary embodiment of the invention described herein;

FIG. 16 shows a display method according to an exemplary embodiment of the invention described herein;

FIG. 17 shows a display method according to an exemplary embodiment of the invention described herein; and

FIG. 18 shows a display method according to an exemplary embodiment of the invention described herein.

### DETAILED DESCRIPTION OF EMBODIMENTS

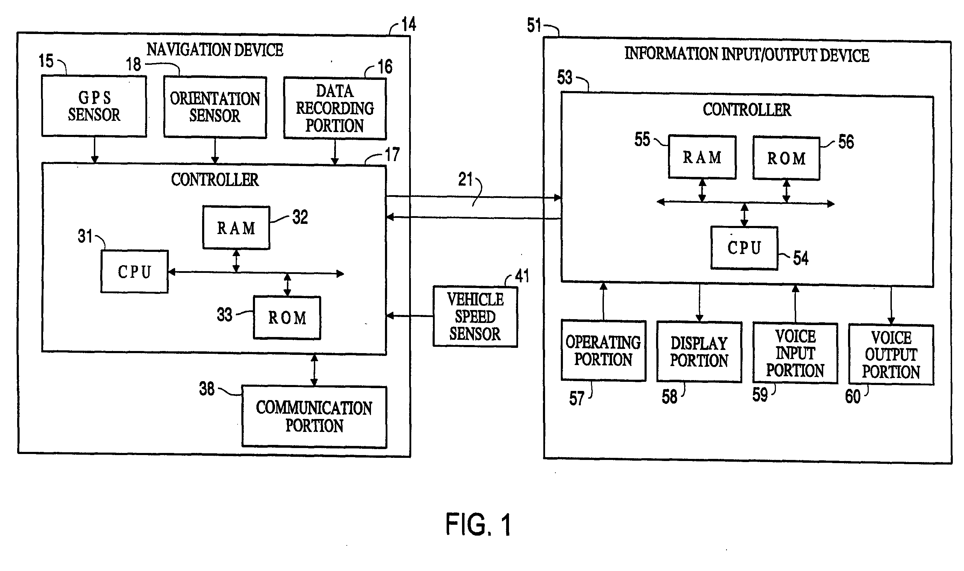

FIG. 1 is a block diagram showing an exemplary navigation system. Fig. 1 shows a navigation device 14, for example, serving as a first onboard device mounted in a vehicle. The navigation device 14 may include, for example, a GPS sensor 15, a memory 16, a controller 17, an orientation sensor 18, and/or a communication portion 38. The GPS sensor 15, for example, detects a present location. The memory 16, for example, records various information in addition to, for example, map data. The controller 17, for example, may control the functions of the navigation device 14, for example, based upon various instructions, programs, and/or data and may output display elements. The display elements may include structure letters and/or images to be displayed on various screens, for example, based upon input information. The controller 17 may execute various calculations and/or processes for generating data to be displayed, for searching routes, for executing data communication, and/or for providing information such as image information and music information for music programs.

The orientation sensor 18, for example, may detect the vehicle's orientation, and the communication portion 38, for example, may function as a communication terminal. The GPS sensor 15, the memory 16, the orientation sensor 18, and the communication portion 38 may be connected to the controller. The controller 17 may also be connected to a vehicle speed sensor 41 that may detect a vehicle speed and may send the detected vehicle speed to the controller 17.

Fig. 1 shows an information input/output device 51, for example, serving as a second onboard device mounted in the vehicle. The information input/output device 51 may include a controller 53, an operating portion 57, a display portion 58, a voice input portion 59, and a voice output portion 60. The controller 53 may control the information input/output device 51, for example, based upon various programs, and/or data, and may execute various calculations and/or processes, for example, for sending input information to the navigation device 14 and displaying display elements based upon display data sent from the navigation device 14. The operating portion 57 may, for example, execute a predetermined input based upon a user operation. The display portion 58 may, for example, notify the driver of predetermined information. The voice input portion 59 may, for example, execute a predetermined input based upon voice command. The voice output portion 60 may, for example, notify the driver of predetermined information by voice output. The operating portion 57, the display portion 58, the voice input portion 59, and/or the voice output portion 60 may be connected to the controller 53.

Both the navigation device 14 and the information input/output device 51 may be connected via an interface 21 that, for example, enables mutual communication.

According to this example, the information input/output device 51 may function as an information input device when inputting information, and may function as an information output device when outputting information. In addition, according to this example, the controller 53 may function as an information input processing portion when inputting information, and may functions as an information output processing portion when outputting information.

The controller 17 may include, for example, a CPU 31, a RAM 32, a ROM 33, and/or a flash memory (not shown). The CPU 31 may, for example, execute control of the navigation device 14. The RAM 32 may be used, for example, as a working memory when the CPU 31 executes various calculation processing. Various programs and/or instructions may be stored in the ROM 33 such as, for example, programs for control, for sending/receiving various data to and from the information input/output device 51, for generating display data, for searching routes, for executing data communication, and/or for providing information such as music information and image information. The flash memory is used for recording various data, programs, etc.

Electric waves generated from an artificial satellite are received by the GPS sensor 15 in order to detect the present location of the GPS sensor 15 on the earth, as well as the current time. According to this example, the GPS sensor 15 may be used as a present-location-detecting portion. However, a distance sensor, a steering sensor, and/or an altimeter may be used individually or in combination in place of the GPS sensor 15. In addition, a gyro sensor, geomagnetic sensor or the like may be used as the orientation sensor 18.

The memory 16 may have map information such as, for example, a database including map data files. Map data may be recorded in the map database. Additionally, the map data may include such data as, for example, traffic intersection data related to traffic intersections, node data related to nodes, road data related to links, search data processed for searching, and/or facility data related to facilities. It should be noted that voice output data is also recorded in the memory 16 for the output of predetermined information by the voice output portion 60.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein, the term "node" is used to describe a point in the map data, where one or more links connect such as, for example, an intersection, an intersection having more than three roads, a curve, and/or a point at which the road type changes.

Also formed in the memory 16 may be databases such as, for example, a statistical database including statistical data files and a travel log database including travel log data files. Statistical data and travel log data may be recorded as past traffic information in the statistical database and the travel log database, respectively.

For this reason, the memory 16 may include, for example, a hard disk, a CD, a DVD and/or an optical disk that may serve as one or more recording mediums. It should be noted that, for example, a memory card may also be used as a recording medium in the memory 16.

In addition to the above data, various programs and/or other data may be stored on the hard disk. Thus, it may also be possible to read out the programs and/or data, from one portion of the memory 16, e.g., a removable portion, and then write them on the flash memory. Accordingly, the programs and/or data can be updated by replacing a removable portion of the memory 16, such as, for example, the hard disk, the CD, the DVD and/or the optical disk. It may also be possible to receive the programs and/or data, for example, via the communication portion 38 and then record the programs and/or data in the flash memory, the memory 16 or the like. In a vehicle mounted with an automatic transmission, an automatic transmission control device for executing a control of an automatic transmission may be provided. In such a case, for example, control programs and/or data of the automatic transmission control device may also be recorded in the memory 16.

The communication portion 38 may include a beacon receiver and/or an FM receiver. The beacon receiver (for example, electric wave beacon and/or optical beacon) may receive various information sent from, for example, a road traffic information center (not shown) of a Vehicle Information and Communication System (VICS®) via, for example, an electric wave beacon device and/or optical beacon device provided along a road. The FM receiver may also receive such information as multiple broadcasts via an FM broadcast station. Traffic information such as, for example, congestion information, regulation information, parking lot information, traffic accident information, and/or information on the busy status of service areas may be received by the beacon receiver. The FM receiver may also receive general information such as, for example, news and weather reports as FM multiple information in addition to such traffic information. The beacon receiver and the FM receiver may be one unit provided as a VICS receiver, or each may be provided separately.

The communication portion 38 may also receive, for example, various information such as traffic information, general information, image information, and/or music information from an information center (not shown) separate from the road traffic information center. For this reason, the communication portion 38 and the information center may be connected via a network. When connected via a network, it is also possible to provide, for example, the map database, the travel log database, and/or the statistical database in the information center.

According to this example, the navigation device 14, the interface 21, the information input/output device 51, the road traffic information center, the information center, and/or the network may make up a navigation system.

In the information input/output device 51, the controller 53 may include, for example, a CPU 54, a RAM 55, a ROM 56, and/or a flash memory (not shown). The CPU 54 may serve as a control device that controls the information input/output device 51. The RAM 55 may be used as a working memory when the CPU 54 executes various calculation processing. Various programs may be stored in the ROM 56 such as, for example, programs for control, for sending/receiving various data to and from the navigation device 14, and/or for generating various displays using display elements. The flash memory may be used for recording various data and/or programs.

An MPU or other control device, such as a dedicated circuit, may be used as in place of the CPUs 31, 54.

The operating portion 57 may be used, for example, for revising a present location at the start of travel, inputting a point of departure and/or destination, and/or inputting points to be passed along the way. For example, a keyboard and/or a mouse may be used that are provided independently from the display portion 58. Furthermore, for the operating portion 57, it is possible to use, for example, a touch panel designed to allow the execution of a predetermined input operation by touching or clicking image operation elements such as various keys, switches, and/or buttons displayed as images on a screen formed on the display portion 58.

One or more displays may also be used as the display portion 58. This would make it possible to display on various screens formed on the display portion 58 the vehicle's position representing the present location, a map, a search route, traffic information guidance information corresponding to the search route, the distance to the next traffic intersection along the search route, and/or the direction of travel to the next traffic intersection. In addition to this, guidance including instructions for operation menus and keys, the operating portion 57, and/or the voice input portion 59 can be displayed. FM multiple broadcast programs or the like and image information such as movie programs can also be displayed.

The voice input portion 59 may include, for example, a microphone by which required information may be input by voice. Furthermore, the voice output portion 60 may include a speaker and/or a voice synthesizer (not shown), whereby for example, the search route, guidance information, and/or traffic information may be output from the voice output portion 60 in a synthesized voice by the voice synthesizer. Music information may also be output from the output portion 60.

Note that according to this example, the information input/output device 51 may include the information input device for inputting information and the information output device for outputting information as a single unit. However, the information input/output device 51 may also include the information input device and the information output device separately, and connected by an interface. In such a case, the information input device may be provided with, for example, a controller, the operating portion 57, and/or the voice input portion 59. Similarly, the information output device may be provided with a controller, the display portion 58, and/or the voice output portion 60. Each of the controllers within the information input processing portion and the information output processing portion may be provided with provided with one or more of a CPU, a RAM, and/or a ROM.

Next, the basic operation of the above-structured navigation system will be described.

First, the operating portion 57 may be operated by a user. Once the navigation device 14 and the information input/output device 51 are activated, for example, the CPU 31 may read out the present location detected by the GPS sensor 15 and the vehicle's orientation detected by the orientation sensor 18, as well as initialize various data. Based upon, for example, the shape and/or layout of road links that structure roads in the vicinity of the present location and the trajectory of the present location read, the present location may thus be identified by determining whether the present location exists on any road links.

Next, the CPU 31 may read out and obtain the map data from the memory 16 or may receive and obtain such information from, for example, the information center via the communication portion 38. Note that in the case of obtaining such information from the information center, the CPU 31 may download the received navigation data to, for example, the flash memory. Moreover, when obtaining the navigation data via the communication portion 38, a program may also be obtained as well.

The CPU 31 may generate display data for displaying at least the vehicle's position and a map of the vicinity of the vehicle's position on a map screen generated on the display portion 58. The CPU 31 may then send the display data to the information input/output device 51.

In the information input/output device 51, the CPU 54 may receive the display data. The CPU 54 may record at least a portion of the display data on the RAM 55, the ROM 56, and/or the flash memory. The CPU 54 then may generate a map screen on the display portion 58, and may display the vehicle's position and a map of the vicinity of the vehicle on the map screen. Note that the map may be created based upon the vehicle's orientation and that it is possible to select heading-up to coincide the front of the vehicle's orientation and the top of the map or select north-up to coincide north with the top of the map.

Accordingly, the driver can run the vehicle following the map and the vehicle's position.

Additionally, the navigation device 14 is designed to allow the receipt of traffic information and/or general information via the communication portion 38. Accordingly, the CPU 31 displays the additional information on the map screen as display elements. In this manner, the user is capable of finding out the status of, for example, traffic congestion on routes such as the search route and/or intended travel routes the vehicle is to travel.

In the information input/output device 51, when the driver operates the operating portion 57 to input a destination, the CPU 31 may set processing to set the destination. Note that the point of departure may also be input and set as a point other than the present position. Furthermore, it is possible to register a predetermined point in advance, and then input the registered point as the destination.

Once the destination is set, the CPU 31 may read the present location and/or destination and may read out map data from the memory 16. Thereafter, the CPU 31 may search for a route from the point of departure to the destination and may output route data representing the search route. Next, the CPU 31 may read the route data and may generate display data according to the route data for displaying the search route among the display elements on the map screen. The CPU 31 may then send the display data to the information input/output device 51.

When the display data is received by the information input/output device 51, the CPU 54 records the display data. The CPU 54 may then display the search route on the map screen. Accordingly, the user can drive the vehicle following the search route displayed on the map screen.

Note that, as the need arises, the CPU 31 may read route data and generate voice output data for providing spoken search route guidance. The CPU 31 may then send the voice data to the information input/output device 51. In this case, output data is structured by the voice data. Then, in the information input/output device 51, once the voice data is received, the CPU 54 outputs the search route in a voice based upon the voice data. Accordingly, the user can run the vehicle following the spoken search route output.

In this manner, according to this example, display data for displaying display elements on various screens is generated by the navigation device 14, and the display elements are displayed on various screens according to the display data by the information input/output device 51. Therefore, even if functions are added or modifications are made to the navigation device 14 within extremely short periods of time, only the navigation device 14 need be updated or replaced. This makes it possible to use the information input/output device 51 over a longer period of time, and consequently increase the convenience and decrease the costs of the navigation system.

Processing for displaying display elements on the map screen is designed to be executed in the information input/output device 51, whereas other processing such as processing for route searching, processing for data communication, and processing for providing music or image information is executed in the navigation device 14. Therefore, it is possible to reduce the processing amount of calculation processing in the CPUs 31, 54, when compared to only a single CPU. Accordingly, the processing time can also be shortened by a corresponding amount.

According to the present example, it is also possible when changing the output status of the information input/output device 51 to change the style of the input/output portion, for example, the design or the like of the functions and various screens of the operating portion 57.

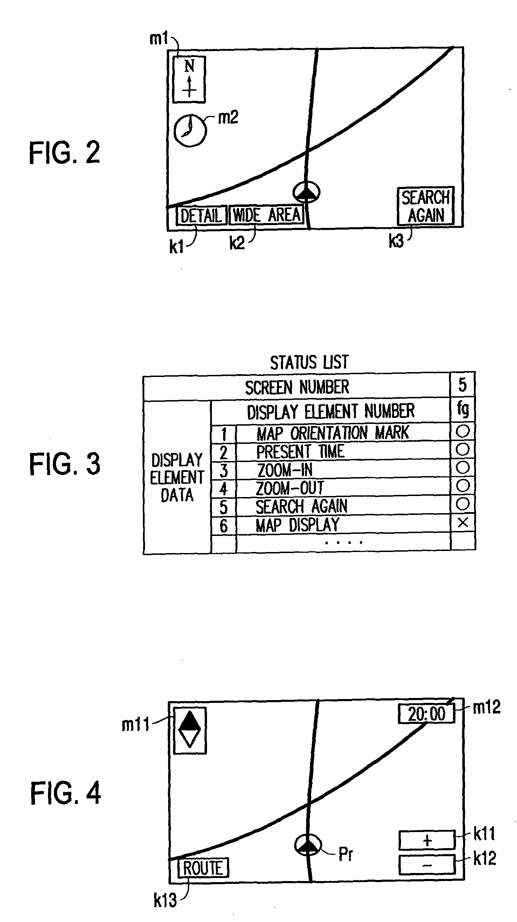

FIG. 2 shows an example of a map screen, FIG. 3 shows an exemplary status list of the map screen, and FIG. 4 shows another example of a map screen. According to these examples, the CPU 31 in the navigation device 14 (FIG. 1) generates display data for displaying various display elements on a predetermined screen, such as the exemplary map screens, that is to be formed on the display portion 58. The CPU 31 then sends the display data to the information input/output device 51.

When the display data is received by the CPU 54 in the information input/output device 51, the CPU 54 records the display data. The CPU 54 then executes generates a map screen on the display portion 58, and display the display elements on the map screen. In FIG. 2, display elements including, for example, a map, the vehicle's position Pr, a map orientation mark m1, a present time m2, and keys k1 to k3 may be displayed. The key k1 may be, for example, an area detail key for displaying a more detailed map by zooming in, while the key k2 may be, for example, a wide area key for displaying a broader map by zooming out. The key k3 may be, for example, a search again key for performing route searching again once a search route is displayed.

Besides the map, for example, properties representing map characteristics such as the map orientation mark m1 and the present time m2, image operation elements with operation functions such as the keys k1 to k3, switches and buttons, and/or items for identifying points on the map (such as the names of facilities, rivers, mountains, roads and railroads) may also be included as display elements.

Additionally, when various screens are formed on the display portion 58, the CPU 31 may generate output status information representing the output status of the screen formed on the display portion 58. Such information is generated at a predetermined timing such as a fixed cycle, or when there is a predetermined operation of the operating portion 57 or a predetermined change in the vehicle running state.

As a result, an output status information table may be formed in the ROM 33, and the output status information may be recorded in the output status information table. The CPU 31 generates output status information by referring to and reading out the output status information table. As shown in FIG. 3, the output status information may include, for example, a screen number (in this case, 5) serving as a screen identification indicator and an output section identification indicator for specifying a screen, such as the map screen, formed on the display portion 58, and/or data (hereinafter referred to as "display element data") related to display elements that are displayed on the map screen. Also note that output element data may be structured by the display element data.

In FIG. 3, the display element data may include, for example, the map orientation mark m1, the present time m2, a zoom-in function represented by the key k1, a zoom-out function represented by the key k2, a search again function represented by the key k3, a display element number serving as an output element identification indicator for specifying display elements such as a map display for displaying a map, and/or a change propriety flag fg in the information input/output device 51. The flag fg may, for example, indicating whether a change in style such as the layout or display of display elements is permitted. According to this example, if a change in style is permitted, the change propriety flag fg is turned ON (O); if a change in style is not permitted, the change propriety flag fg is turned OFF (X).

Also note that according to this example, a screen number may be included in the output status information. However, the screen number may not be included in the output status information when information representing which screen a display element is displayed on is included in the display element data. Furthermore, according to this example, the display element data may also include a display attribute representing display element content for the display element. In such a case, the display element may be identified by the display element number, and the display element content can be prescribed by the display attribute serving as an output attribute. Therefore, display element data can be easily controlled.

The CPU 31 may subsequently send the output status information to the information input/output device 51 as a status list.

Additionally, a scenario serving as a style output status change condition may be set for the display elements for each screen in the information input/output device 51. Scenario data representing the scenario may be recorded in the ROM 56.

As a result, the CPU 54 may receive the status list and may read out the status list when image processing is executed for the display data. The CPU 54 then determines whether the change propriety flag fg for each display element is ON. If ON, changes may be made in accordance with the scenario to the style of the display elements whose change propriety flags fg are ON.

In FIG. 3, for example, the change propriety flags fg are turned ON for the display elements of the map orientation mark m1, the present time m2, the zoom-in function represented by the key k1, the zoom-out function represented by the key k2, and the search again function represented by the key k3. Therefore, as shown in FIG. 4, the style may be changed, thereby allowing a map, the vehicle's position Pr, a map orientation mark m11, a present time m12, keys k11 to k13 and/or other elements to be displayed. The key k11 is an area detail key (+), while the key k12 is a wide area key (-). The key k13 is a search again key (ROUTE). Moreover, predetermined display elements such as the keys k3, k13, for example, can be deleted as necessary.

In this manner, it is possible to change the display element style for predetermined display elements by simply replacing the information input/output device 51. This in turn makes it possible to change the design of the input/output portion, such as the style or the like of various screens and the functions of the operating portion 57, without having to replace the entire navigation system. Therefore, the cost of the navigation system can be reduced.

Furthermore, in the information input/output device 51, it is possible to identify the display elements whose style can be changed based upon the ON/OFF status of the change propriety flag fg. Therefore, the design of the information input/output device 51 can be easily changed.

Additionally, according to this example, the information input/output device 51 may be designed such that operation of the operating portion 57 by the user changes the output status of the screen and changes the content of processing, such as display data generation processing and route search processing, with regards to a predetermined display element.

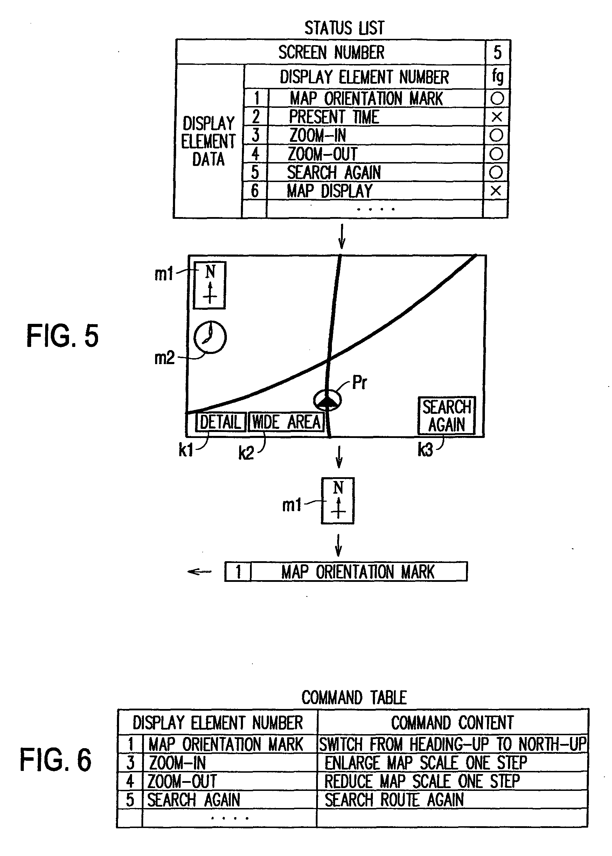

FIG. 5 shows an exemplary display method. FIG. 6 shows an exemplary command table of the map screen. According to these examples, the output status information may be recorded in the output status information table in the ROM 33. The table may include a screen number (in this case, 5) for specifying a screen, such as a map screen, formed on the display portion 58 and display element data.

The CPU 31 may generate output status information by reading the output status information out at a predetermined timing. The CPU 31 may then send the output status information to the information input/output device 51 as a status list.

The display element data may include a screen number for specifying the display elements, and a flag FG. The flag FG, for example, a command propriety flag FG, in the information input/output device 51 may indicate whether a predetermined command for the display elements may be sent to the navigation device 14. According to this example, if the sending of a command to the navigation device 14 is permitted, the command propriety flag FG is turned ON (O). If the sending of a command to the navigation device 14 is not permitted, the command propriety flag FG is turned OFF (X). In this case, the command may request a change in the output status of the map screen and may represent an output status change request.

According to this example, the command propriety flag FG is turned ON for the display elements of the map orientation mark m1, the zoom-in function, the zoom-out function, and the search again function in this case. Therefore, when the driver operates the operating portion 57 in the information input/output device 51 and touches a predetermined display element, such as the map orientation mark m1, the CPU 54 may executes output status change request processing for the map orientation mark m1. In order to request a change in output status, a command indicating that the map orientation mark m 1 has been selected is sent to the navigation device 14.

It should be noted that, according to this example, the command may only indicate that the map orientation mark m 1 has been selected as the subject of a request for a change in output status subject. Content requesting a change in output status, i.e., command content, is not included. Thus in the navigation device 14, a command table as shown in FIG. 6 is formed in the ROM 33, and command content corresponding to the display elements is recorded. For example, "switch heading-up to north-up" content is recorded corresponding to the map orientation mark m1.

Accordingly, once the command is sent from the information input/output device 51, the CPU 31 refers to the command table and reads the command content "switch heading-up to north-up." The CPU 31 then generates display data to switch the map screen from heading-up to north-up. Thereafter, CPU 31 sends the display data to the information input/output device 51.

The CPU 54 subsequently receives the display data. Next, the CPU 54 generates a map screen on the display portion 58 and displays a map with a different map orientation. In this manner, the output status of the display portion 58 can be changed based upon a request from the information input/output device 51.

Note that, according to this example, there is other command content recorded in the command table. For example, "enlarge map scale one step" for enlarging the map scale one step that corresponds to the zoom-in function may be recorded. "Reduce map scale one step" for reducing the map scale one step that corresponds to the zoom-out function may be recorded. "Search route again" for performing a route search again that corresponds to the search again function may be recorded. In this case, a scenario serving as an output status change condition may be structured by the command content, and data representing the command content may be recorded in the ROM 56 as scenario data.

According to this example, the operation of the operating portion 57 by the user may also enable a change in output status where a predetermined screen is shifted to another screen, i.e., a screen shift is executed. An operation of the CPU 31 for setting a destination by executing a screen shift will be described.

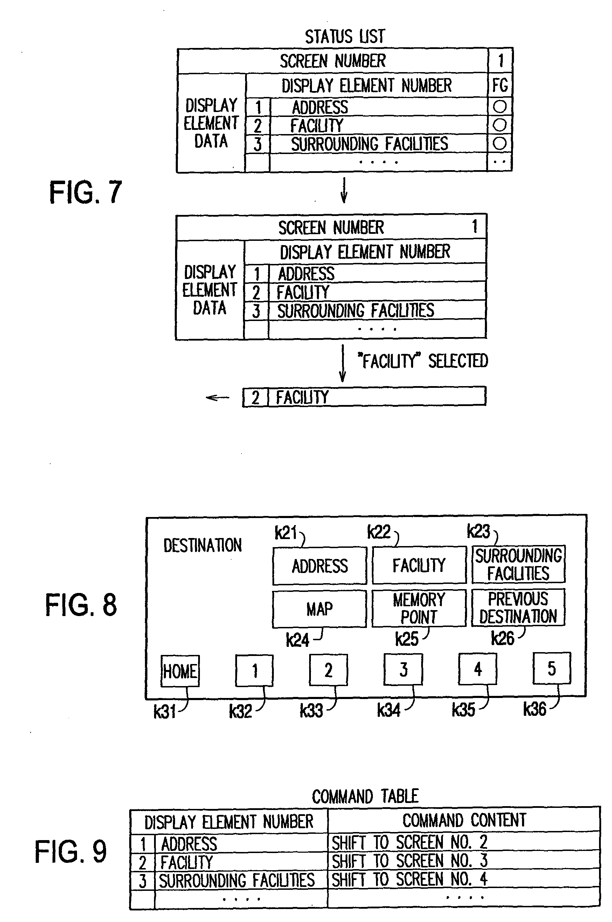

FIG. 7 shows an exemplary display method. FIG. 8 shows an exemplary destination setting screen. FIG. 9 shows an exemplary command table of the destination-setting screen.

According to this example, the CPU 31 in the navigation device 14 may generate display data for displaying display elements on a predetermined screen, such as a destination-setting screen that is to be formed on the display portion 58. The CPU 31 then sends the display data to the information input/output device 51. When the display data is received by the CPU 54 in the information input/output device 51, the CPU 54 records the display data. The CPU 54 then generates a destination-setting screen (such as, for example, shown in FIG. 8) on the display portion 58 and displays the display elements including keys k21 to k26, k31 to k36 on the destination setting screen.

The key k21 is displayed, for example, for searching and setting a destination using an address. The key k22 is displayed, for example, for searching and setting a destination by facility. The key k23 is displayed, for example, for searching and setting a destination using facilities surrounding the present location. The key k24 is displayed, for example, for searching and setting a destination using a map. The key k25 is displayed, for example, for searching and setting a destination using a set memory point searched in advance. The key k26 is displayed, for example, for searching and setting a destination using a previous destination. In addition, the key k31 may be a quick setting key for swiftly setting a home registered in advance as the destination. The keys k32 to k36 are, for example, quick setting keys for swiftly setting quick registered locations from 1 to 5 registered in advance as the destination.

According to this example, the output status information, for example, shown in FIG. 7 may be recorded in the output status information table in the ROM 33 and may include a screen number (in this case, 1) for specifying a screen, such as a destination-setting screen formed on the display portion 58, and display element data.

The CPU 31 may generate output status information by reading it out at a predetermined timing. The CPU 31 may then send the output status information to the information input/output device 51 as a status list.

The display element data may include a screen number for specifying the display elements and the command propriety flag FG indicating whether a predetermined command for the display elements may be sent to the navigation device 14.

In this example, the command propriety flag FG is turned ON for each display element. Therefore, when the user operates the operating portion 57 in the information input/output device 51 and touches a predetermined display element, such as, for example, the key k22, the CPU 54 sends a command to the navigation device 14 indicating that facility has been selected, in order to request a change in output status.

It should be noted that the command may only indicate that facility has been selected as the subject of a request for a change in output status subject. Command content may not be included. Thus, in the navigation device 14, a command table, for example, as shown in FIG. 9 may be formed in the ROM 33 and command content corresponding to the display elements may be recorded. For example, "shift to screen No. 3" content may be recorded corresponding to facility.

Accordingly, once the command is sent from the information input/output device 51, CPU 31 refers to the command table and reads the command content "shift to screen No. 3." The CPU 31 then generates display data for screen No. 3 among the destination setting screens. Thereafter, the CPU 31 sends the display data to the information input/output device 51.

Once the CPU 54 receives the display data, the CPU 54 records the display data. The CPU 54 then generates the screen of the screen No. 3 on the display portion 58. In this manner, the output status of the display portion 58 can be changed based upon a request from the information input/output device 51.

In this example, the command content is designated as content where a screen shifts to another screen when the display elements are selected. Note that there is other command content may be recorded in the command table such as, for example, "shift to screen No. 2," which corresponds to the address option, and "shift to screen No. 4," which corresponds to the surrounding facilities option.

Thus, according to this example, it is possible to change the content of displayed data and route search processing in the information input/output device 51, thus increasing the convenience of the navigation system.

Furthermore, according to this example, it is possible to identify a command that can be sent to the navigation device 14 by the ON/OFF status of the command propriety flag FG. Therefore, the content of processing for a predetermined display element can be easily changed.

It should be noted that when displaying display elements on the map screen formed on the display portion 58 according to this example, the CPU 31 in the navigation device 14 generates display data for the display elements. The CPU 31 then sends the display data to the information input/output device 51. When the display data is received by the CPU 54 in the information input/output device 51, the CPU 54 records the display data. The CPU 54 then generates a map screen and displays the display elements on the map screen.

The display data may also include data for displaying a map, which leads to a large amount of data. However, because the navigation device 14 and the information input/output device 51 are connected by the interface 21, it is not possible to increase the amount of data per unit time of display data that can be sent via the interface 21. Consequently, when the user, for example, operates the operating portion 57 to change the output status by scrolling through the map screen, the map screen may temporarily turn blank if a sufficient data amount of display data cannot be sent from the navigation device 14 to the information input/output device 51.

According to the present example, the CPU 31 in the navigation device 14 may sends an amount of data for multiple screens (which according to this example is a data amount of display data for ten screens). The amount of data is greater than an amount of data for one screen, and is sent as data for an output status change to the information input/output device 51 regardless of whether the user scrolls through the map screen.

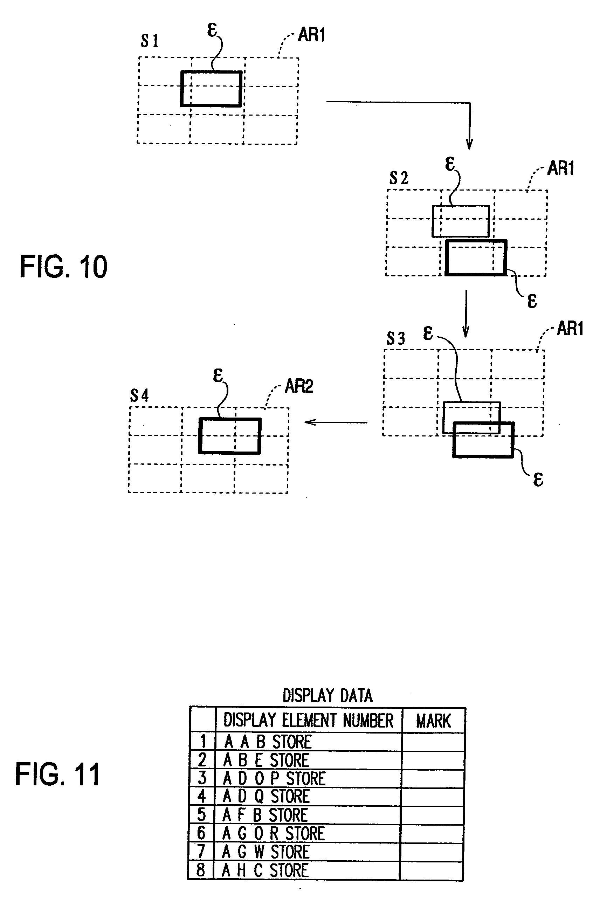

FIG. 10 shows an exemplary drawing method. As shown in FIG. 10, an area of cache data AR1 may be recorded in the RAM 55 prior to the start of scrolling, and an area of display data ε may be used for displaying a map on the map screen.

In a state S1, for example, when the user scrolls through the map screen, a screen shift request is sent from the operating portion 57 to the CPU 54. Accordingly, the CPU 54 moves the position of the area ε in the direction of scrolling, and reads out the display data within the area ε. The screens are subsequently shifted and generated in succession. After ten screens are generated, the area ε reaches an outer peripheral edge of the area AR1 as shown in a state S2. If further scrolling is performed, a portion of the area ε separates from the area AR1as shown in a state S3, such that the display data falls short of that required for displaying the map.

Hence, the output status change processing unit uses display data within the area ε in the state S2, in order to maintain the last screen generated in the state S2 unchanged. Consequently, the map screen can be prevented from temporarily turning blank.

When the position of the area ε is moved in the direction of scrolling while the map screen is being scrolled, the CPU 54 sends a data send request to the navigation device 14. The request requests the sending of display data required due to moving of the position of the area e.

Thereafter, the CPU 31 in the navigation device 14 generates display data for a predetermined area in accordance with the data send request. The CPU 31 then sends the display data to the information input/output device 51. Consequently, as shown in a state S4, the area ε becomes newly contained within an area AR2 of cache data recorded in the RAM 55.

In this manner, display data for multiple screens may be stored in advance in the RAM 55. Therefore, an insufficient amount of display data as a result of draw processing can be prevented. Thus, when an attempt is made to change the output status by scrolling through the map screen, for example, the display elements can be sufficiently displayed on various screens to achieve a smooth display.

According to the present example, the CPU 31 in the navigation device 14 is designed to send, for example, a data amount of display data for ten screens to the information input/output device 51 in advance regardless of whether the driver scrolls through the map screen. However, when the driver scrolls through the map screen, the display data send processing unit can also send to the information input/output device 51, for example, display data for ten screens for moving a position in the direction of scrolling.

Moreover, touching a predetermined key among the keys k21 to k23, k25 in may selects a predetermined display element such as the surrounding facilities option from among the address, facility, surrounding facilities and memory point options. Thereafter, the CPU 31 generates screen No. 4 (for example, a surrounding facilities list screen) on the display portion 58. Surrounding facilities may then be displayed on the surrounding facilities list screen as display elements in a list format.

Specifically, the CPU 31 may generate data for displaying names, symbols, and/or landmarks for the surrounding facilities as display data, which are then sent to the information input/output device 51. In this case, the display data may also include that for displaying a map of the vicinity of surrounding facilities when a predetermined surrounding facility is selected as the destination, which leads to a large amount of data. However, because the navigation device 14 and the information input/output device 51 are connected by the interface 21, it is not possible to increase the amount of data per unit time of display data that can be sent via the interface 21.

Furthermore, the number of surrounding facilities that can be displayed on the surrounding facilities list screen is limited. Therefore, the surrounding facilities list screen has been designed to allow scrolling.

Consequently, when the user, for example, operates the operating portion 57 to change the output status by scrolling through the surrounding facilities list screen, the surrounding facilities list screen may temporarily turn blank if a sufficient data amount of display data cannot be sent from the navigation device 14 to the information input/output device 51.

According to this example, the display data send processing unit of the CPU 31 in the navigation device 14 may send an amount of data for multiple screens, such as, for example, a data amount of display data for ten screens. The amount of data is greater than an amount of data for one screen, and is sent as data for an output status change to the information input/output device 51 regardless of whether the driver scrolls through the surrounding facilities list screen. In addition, the recording processing unit of the CPU 54 in the information input/output device 51 is designed to record at least a portion of a data amount of display data for multiple screens in the RAM 55 as cache data.

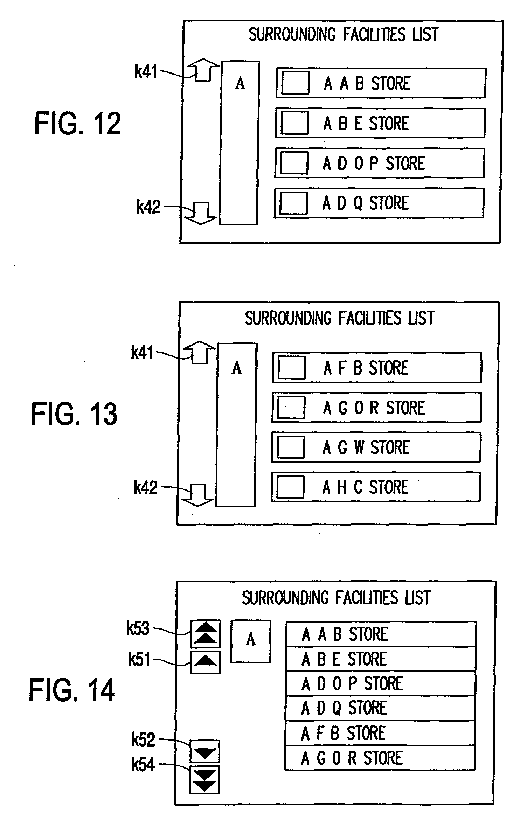

FIG. 11 shows an example of display data for displaying surrounding facilities. FIG. 12 shows an example of a screen listing surrounding facilities. FIG. 13 shows an exemplary screen listing surrounding facilities. FIG. 14 shows an exemplary screen listing surrounding facilities.

According to these examples, the display data may include the names, symbols, and/or landmarks of surrounding facilities. When display data such as shown in FIG. 11 is sent to the information input/output device 51, the CPU 54 generates surrounding facilities list screens such as, for example, shown in FIGS. 12 and 13, based upon the display data. In FIGS. 12 and 13, keys k41, k42 are scroll keys. Touching the keys k41, k42 displays surrounding facilities for multiple screens as display elements.

According to the present example, the amount of display data for multiple screens may be recorded in the RAM 55 as cache data. Therefore, when the driver scrolls through the surrounding facilities list screen, a screen shift request is sent from the operating portion 57 to the CPU 54. As a result, the CPU 54 reads out the display data within the RAM 55 to shift and generate screens in succession.

However, once all the display data is read out, the display data falls may short of that required for displaying the list of surrounding facilities. Hence, the CPU 54 maintains the last screen generated unchanged. Consequently, the surrounding facilities list screen can be prevented from temporarily turning blank.

While the surrounding facilities list screen is being scrolled, the CPU 54 sends a data send request to the navigation device 14 requesting the sending of display data required due to scrolling. Thereafter, the CPU 31 in the navigation device 14 generates display data for a predetermined area in accordance with the data send request. The CPU 31 then sends the display data to the information input/output device 51.

In this manner, the amount of display data for multiple screens may be stored in advance in the RAM 55. Therefore, an insufficient amount of display data can be prevented. Thus, the display elements can be sufficiently displayed on various screens to achieve a smooth display.

According to the present example, the CPU 31 in the navigation device 14 is designed to send, for example, a data amount of display data for multiple screens to the information input/output device 51 in advance regardless of whether the driver scrolls through the surrounding facilities list screen. However, when the driver scrolls through the surrounding facilities list screen, the display data send processing unit can also change the display elements in the direction of scrolling and send to the information input/output device 51, for example, display data for ten screens.

Note that in a surrounding facilities list screen such as, for example, shown in FIG. 14, keys k51, k52 for scrolling and keys k53, k54 for jumping to the first or last screen are displayed as display elements.

In this case, the first surrounding facility or the last surrounding facility from among the surrounding facilities in the surrounding facilities list may be immediately displayed as a display element when jumping is performed. Therefore, display data for all screens may be stored in the RAM 55 in advance.

A description has been given of when a predetermined screen is scrolled in the present example. However, a data amount of display data for multiple screens can be recorded in the RAM 55 as cache data for cases when screen shifts are performed between multiple screens that are related. When a screen shift request is sent from the operating portion 57 to the CPU 54, the CPU 54 reads out the display data within the RAM 55, and generates each screen in succession. Once all the display data is read out, the CPU 54 maintains the screen generated last unchanged.

Additionally, the status list sent by the CPU 31 to the information input/output device 51 may not include command content as display element data. The CPU 54 may be designed to send only a command indicating that a predetermined display element has been selected to the navigation device 14. Therefore, a command table such as shown in FIG. 9 is formed in the ROM 33, and the CPU 31 refers to the command table and reads the command content to generate display data. Consequently, the amount of processing in the CPU 31 may increase by a corresponding amount, whereby the processing time is also lengthened by a corresponding amount.

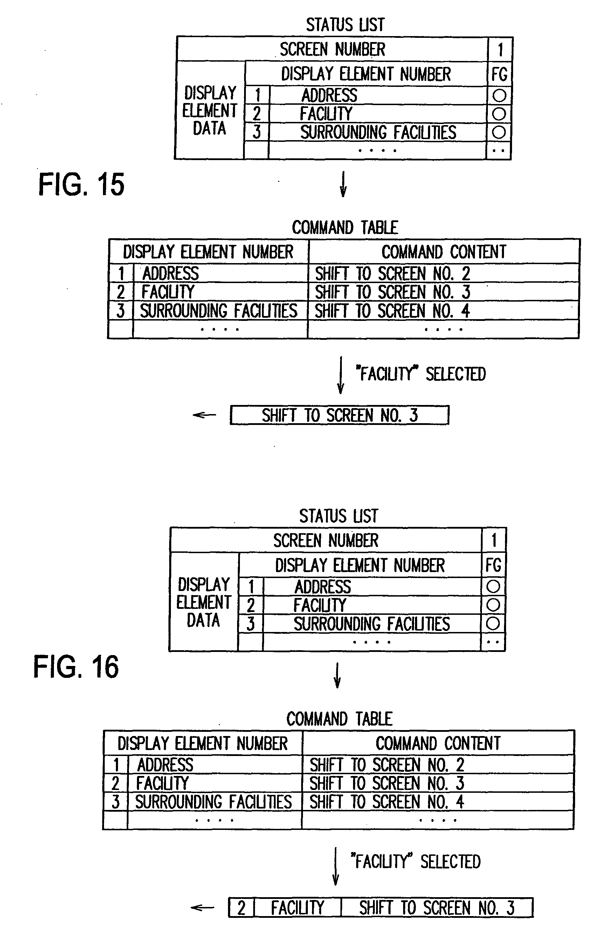

In light of this, a command table may be formed in the ROM 56 and command content is recorded in the command table. FIG. 15 shows an exemplary display method.

In this case, as shown in FIG. 15, the output status information may recorded in the ROM 33 and may includes a screen number (in this case, 1) for specifying a screen, such as the destination setting screen, formed on the display portion 58 and display element data.

The CPU 31 generates output status information at a predetermined timing by reading it out from the ROM 33. Thereafter, the CPU 31 may send the output status information as a status list to the information input/output device 51.

The display element data may include a display element number for specifying each display element and the command propriety flag FG that indicates whether a predetermined command for the display elements may be sent to the navigation device 14.

Meanwhile, a command table may be formed in the ROM 56 in the information input/output device 51, and command content may be recorded in the command table. Such command content may include, for example, "shift to screen No. 2" that corresponds to the address option, "shift to screen No. 3" that corresponds to the facility option, and/or "shift to screen No. 4" that corresponds to the surrounding facilities option. In this example, a scenario serving as an output status change condition may be structured by the command content, and data representing the command content are recorded in the ROM 56 as scenario data.

According to the present example, the command propriety flag FG is turned ON for the display elements of the address, facility, surrounding facilities and other options. Therefore, when the user operates the operating portion 57 and touches a predetermined display element, such as the key k22, the CPU 54 determines that the facility option has been selected in order to request a change in output status. The CPU 54 then reads out the command content "shift to screen No. 3" from the command table, which is sent to the navigation device 14.

Accordingly, once the command is sent from the information input/output device 51, the CPU 31 reads the command content "switch to screen No. 3." The CPU 31 then generates display data for the screen of the screen No. 3 among the destination setting screens. Thereafter, the CPU 31 sends the display data to the information input/output device 51.

Once the CPU 54 receives the display data, the CPU 54 records the display data. The CPU 54 then generates the screen of the screen No. 3. In this manner, the output status of the display portion 58 can be changed based upon a request from the information input/output device 51.

According to the present example, because there is no need to refer to the command table in the CPU 31, the amount of processing in the CPU 31 is reduced by a corresponding amount, whereby the processing time is also shortened by a corresponding amount.

FIG. 16 shows another exemplary display method. According to this example, the display element data of the status list sent to the information input/output device 51 may include a display element number for specifying each display element and the command propriety flag FG. A command table may be formed in the ROM 56 in the information input/output device 51, and command content recorded in the command table, for example, may include "shift to screen No. 2" that corresponds to the address option, "shift to screen No. 3" that corresponds to the facility option, and/or "shift to screen No. 4" that corresponds to the surrounding facilities option. In this case, a scenario serving as an output status change condition is structured by the command content, and data representing the command content is recorded in the ROM 56 as scenario data.

Therefore, when the user operates the operating portion 57 and touches a predetermined display element, such as the key k22, the CPU 54 determines that the facility option has been selected in order to request a change in output status. The CPU 54 then reads out a command indicating that the facility option has been selected and the command content "shift to screen No. 3" from the command table, which is sent to the navigation device 14.

According to the present embodiment, since there is no need to refer to the command table in the CPU 31, the amount of processing in the CPU 31 and processing time is reduced by a corresponding amount.

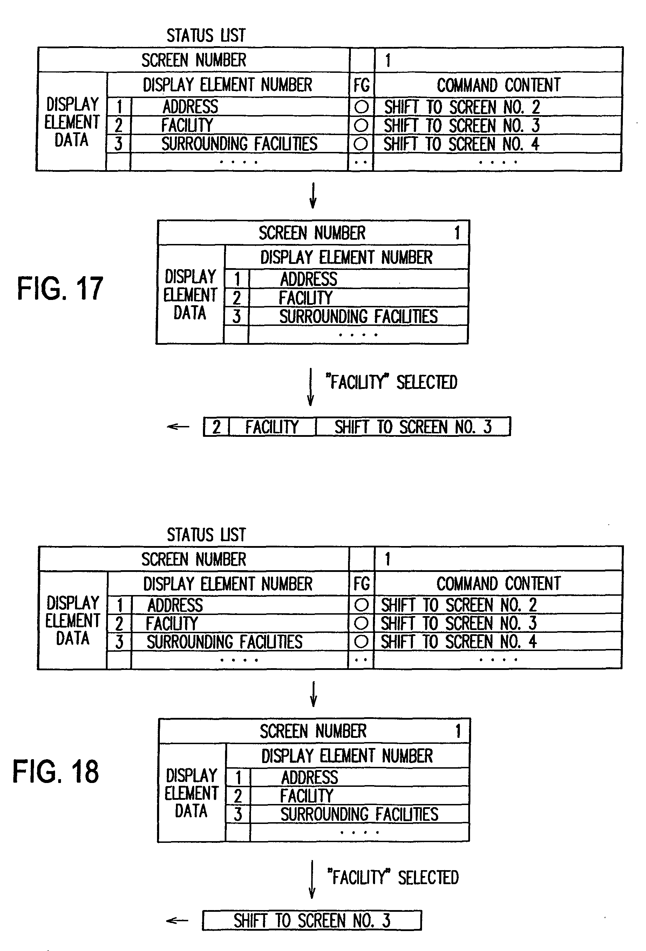

FIG. 17 shows an exemplary display method. According to this example, the display element data of the status list sent to the information input/output device 51 may include a display element number for specifying each display element, the command propriety flag FG , and command content.

Therefore, when the user operates the operating portion 57 and touches a predetermined display element, such as the key k22, the CPU.54 determines that the facility option has been selected in order to request a change in output status. The CPU 54 then reads out a command indicating that the facility option has been selected and the command content "shift to screen No. 3" from the status list. In this case, a scenario serving as an output status change condition is structured by the command content.

In this manner, according to the present example, command content can be read from the status list sent to the information input/output device 51. This eliminates the need for forming the command table in the ROMs 33, 56.

FIG. 18 shows an exemplary display method. According to this example, the display element data of the status list sent to the information input/output device 51 may include a display element number for specifying each display element, the command propriety flag FG, and command content.

Therefore, when the driver operates the operating portion 57 serving as the first input portion and touches a predetermined display element, such as the key k22, the CPU 54 determines that the facility option has been selected in order to request a change in output status. The CPU 54 then reads out command content "shift to screen No. 3" that corresponds to the facility option from the status list, which is sent to the navigation device 14. In this case, a scenario serving as an output status change condition is structured by the command content.

In this manner, according to the present example, command content can be read from the status list sent to the information input/output device 51. This eliminates the need for forming the command table in the ROMs 33, 56.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.
As described above, navigation display devices, systems, methods, and/or programs acquire map data; generate output data for displaying a map based upon the map data; and send to an information input/output device an amount of the output data that is greater than one output section, one output section being an amount of the output data that can be displayed on a single screen of the information input/output device. Navigation display devices, systems, methods, and/or programs receive an amount of output data greater than one output section from a navigation device; record at least a portion of the output data in the recording device; output a section of the output data on the output portion; and shift the output data that is output on the output portion in accordance with a shift request from the input portion, such that a different section of the output data is displayed on the output portion.
Navigation display devices, systems, methods, and/or programs acquire map data; generate output data for displaying a map based upon the map data; and send to an information input/output device an amount of the output data that is greater than one output section, one output section being an amount of the output data that can be displayed on a single screen of the information input/output device. Navigation display devices, systems, methods, and/or programs receive an amount of output data greater than one output section from a navigation device; record at least a portion of the output data in the recording device; output a section of the output data on the output portion; and shift the output data that is output on the output portion in accordance with a shift request from the input portion, such that a different section of the output data is displayed on the output portion.

## Claims

1. A navigation device, comprising:
a controller that:
acquires map data;
generates output data for displaying a map based upon the map data; and
sends to an information input/output device an amount of the output data that is greater than one output section, one output section being an amount of the output data that can be displayed on a single screen of the information input/output device.

2. The navigation device of claim 1, wherein the controller:
generates display data for displaying a display element on various screens; and
sends the display data to the information input/output device.

3. An information input/output device comprising:
an input portion;
an output portion; and
a controller that:
receives an amount of output data greater than one output section from a navigation device, one output section being an amount of the output data that can be displayed on a single screen of the information input/output device;
records at least a portion of the output data in the recording device;
outputs a section of the output data on the output portion; and
shifts the output data that is output on the output portion in accordance with a shift request from the input portion, such that a different section of the output data is displayed on the output portion.

4. The information input/output device of claim 3, wherein the controller:
receives display data from the navigation device; and
displays a display element based upon the display data.

5. The information input/output device of claim 3, wherein the shift request is a request to scroll a screen.

6. The information input/output device of claim 3, wherein the controller:
continues to display the displayed section of the output data when there is insufficient output data recorded in the recording device to shift the output data.

7. The information input/output device of claim 3, wherein the controller:
requests the sending of additional output data from the navigation device when there is insufficient output data recorded in the recording device.

8. A navigation system comprising:
a navigation device; and
an information input/output device that is connected with the navigation device, wherein
the navigation device, comprises a first controller that acquires map data, generates output data for displaying a map based upon the map data, and sends to an information input/output device an amount of the output data that is greater than one output section, one output section being an amount of the output data that can be displayed on a single screen of the information input/output device; and
the information input/output device comprises an input portion, an output portion, and a second controller that receives an amount of output data greater than one output section from a navigation device, records at least a portion of the output data in the recording device, outputs a section of the output data on the output portion, and shifts the output data that is output on the output portion in accordance with a shift request from the input portion, such that a different section of the output data is displayed on the output portion.

9. The navigation system of claim 8, wherein:
the navigation system is installed in a vehicle; and
the navigation device may be replaced without replacing the information input/output device.

10. The navigation system of claim 8, wherein:
the navigation system is installed in a vehicle; and
the input/output device may be replaced without replacing the navigation device.

11. A navigation display method, comprising:
acquiring map data;
generating output data for displaying a map based upon the map data; and
sending to an information input/output device an amount of the output data that is greater than one output section, one output section being an amount of the output data that can be displayed on a single screen of the information input/output device.

12. The navigation display method of claim 11, further comprising:
generating display data for displaying a display element on various screens; and
sending the display data to the information input/output device.

13. A storage medium storing a set of program instruction executable on a data processing device and usable to implement the method of claim 11.

14. A navigation display method, comprising:
receiving an amount of output data greater than one output section from a navigation device, one output section being an amount of the output data that can be displayed on a single screen of the information input/output device;
recording at least a portion of the output data in the recording device;
outputting a section of the output data on the output portion; and
shifting the output data that is output on the output portion in accordance with a shift request from the input portion, such that a different section of the output data is displayed on the output portion.

15. The navigation display method of claim 14, further comprising:
receiving display data from the navigation device; and
displaying a display element based upon the display data.

16. The navigation method of claim 14, wherein the shift request is a request to scroll a screen.

17. The navigation display method of claim 14, further comprising:
continuing to display the displayed section of the output data when there is insufficient output data recorded in the recording device to shift the output data.

18. The navigation display method of claim 14, further comprising:
requesting the sending of additional output data from the navigation device when there is insufficient output data recorded in the recording device.

19. A storage medium storing a set of program instruction executable on a data processing device and usable to implement the method of claim 14.
